# EUROPÄISCHE PATENTANMELDUNG

(11) **EP 1 666 334 A1**
(43) Veröffentlichungstag der Anmeldung: **07.06.2006**
(21) Anmeldenummer: 05026261.7
(22) Anmeldetag: 01.12.2005
(51) Int. Cl.: B62D 3/12

(54) **Zahnstangenlenkung**

(30) Priorität: 02.12.2004 DE 202004018672 U
(71) Anmelder: TRW Automotive GmbH, 73553 Alfdorf (DE)
(72) Erfinder: Watzlawek, Gregor, 40545 Düsseldorf (DE)
(74) Vertreter: Sties, Jochen

(57) **Zusammenfassung**

Eine Zahnstangenlenkung, mit einem Gehäuse (20) und einer Zahnstange (22) ist dadurch gekennzeichnet, daß eine Teleskopbuchse (26) an einem Ende der Zahnstange (22) angeordnet ist, um die ein Faltenbalg (24) angeordnet ist.

## Beschreibung

Die Erfindung betrifft eine Zahnstangenlenkung mit einem Gehäuse und einer Zahnstange.

Bekannte Zahnstangenlenkungen sind im wesentlichen aus einem zylinderförmigen Gehäuse gebildet, in dem eine Zahnstange axial verschieblich angeordnet ist. Dabei ist die Lenkwelle über ein Ritzel an die Zahnstange gekoppelt. Auf diese Weise können die Lenkbewegungen eines Fahrers auf die Achsen übertragen werden. Um eine einwandfreie Verschieblichkeit der Zahnstange zu gewährleisten, sind Faltenbalge am Ende des Gehäuses angebracht, die die Zahnstange unter anderem vor Verschmutzung schützen. Auf diese Weise kann das eigentliche Gehäuse darüber hinaus kürzer als üblicherweise ausgebildet werden.

Die Aufgabe der Erfindung besteht darin, eine Zahnstangenlenkung herzustellen, die einen kleineren Bauraum benötigt und somit günstiger herzustellen ist.

Dieses Problem wird bei der eingangs genannten Zahnstangenlenkung dadurch gelöst, daß eine Teleskopbuchse an einem Ende der Zahnstange angeordnet ist, um die ein Faltenbalg angeordnet ist. Die mit der Erfindung erzielten Vorteile bestehen insbesondere darin, daß bei der erfindungsgemäßen Zahnstangenlenkung eine Verkürzung der Zahnstange um die Länge der Teleskopbuchse möglich ist und somit gleichfalls eine Verkürzung des Faltenbalgs. Die Kosten werden dabei erheblich verringert, da es sich bei der Zahnstange um ein teures Bauteil handelt. Darüber hinaus wird der benötigte Bauraum der Zahnstangenlenkung verringert. Insbesondere besteht nicht die Gefahr, daß das Gehäuse in den Raum hineinragt, in den eines der lenkbaren Fahrzeugräder hineinschwenken kann.

Weitere Merkmale und Vorteile der Erfindung ergeben sich aus den Unteransprüchen. Die Erfindung wird nachfolgend anhand der bevorzugten Ausführungsform beschrieben, die in den Zeichnungen dargestellt ist. In den Zeichnungen zeigen:
- Figur 1 eine Unteransicht einer erfindungsgemäßen Zahnstangenlenkung;
- Figur 2 einen vergrößerten Ausschnitt des mit X bezeichneten Bereichs in Figur 1 der Zahnstangenlenkung mit der Zahnstange in einer rechten Stellung;
- Figur 3 einen vergrößerten Ausschnitt des mit X bezeichneten Bereichs in Figur 1 der Zahnstangenlenkung mit der Zahnstange in einer mittleren Stellung; und
- Figur 4 einen vergrößerten Ausschnitt des mit X bezeichneten Bereichs in Figur 1 der Zahnstangenlenkung mit der Zahnstange in einer linken Stellung.

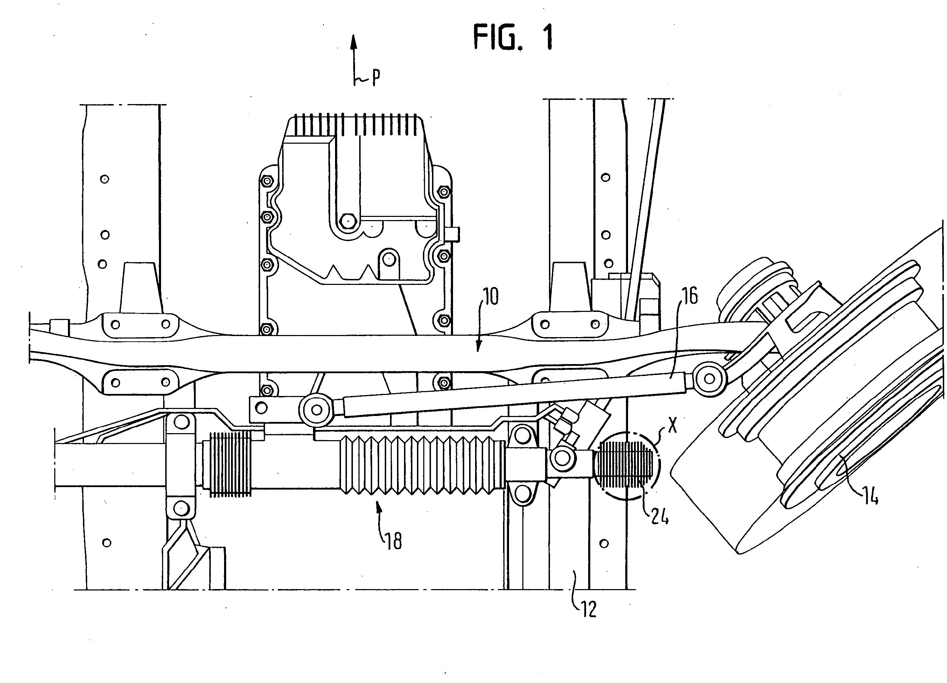

Figur 1 zeigt eine Vorderachse 10 eines Fahrzeugs, von dem hier als wesentliches Bauteil ein Rahmen 12 gezeigt ist. An der Vorderachse 10 ist ein lenkbares Fahrzeugrad 14 angebracht, das über eine Spurstange 16 mit einer Zahnstangenlenkung 18 verbunden ist. Die Zahnstangenlenkung 18 ist fest relativ zum Rahmen 12 angebracht. Mit dem Pfeil P ist die Fahrtrichtung bezeichnet.

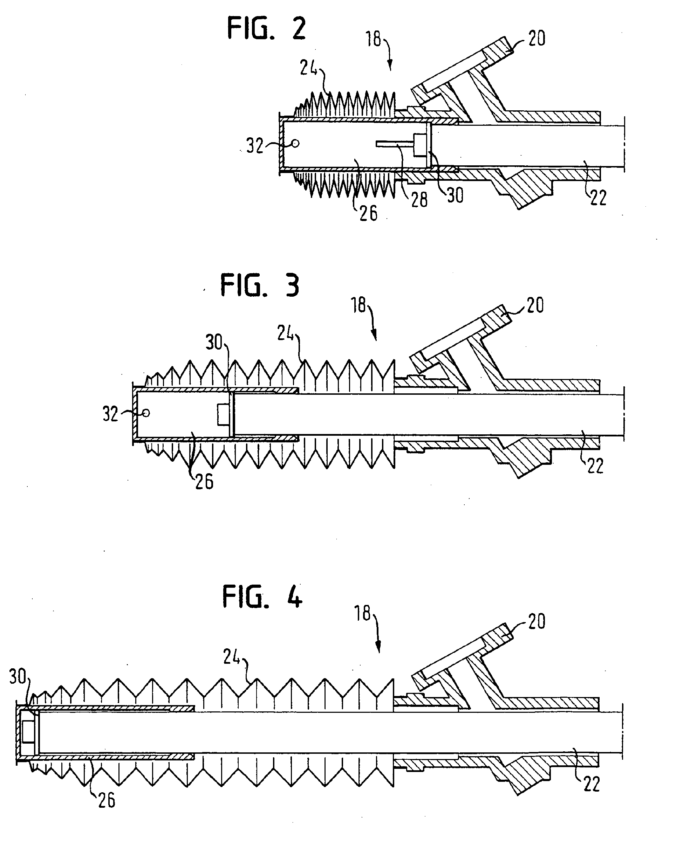

Die Zahnstangenlenkung 18 (s. Figur 2) weist ein Gehäuse 20 auf. An dem bezüglich Figur 1 linken Ende des Gehäuses 20 ist eine Servoeinheit angeordnet (schematisch dargestellt).

In dem Gehäuse 20 ist eine Zahnstange 22 angeordnet. An der Zahnstange 22 greift ein Ritzel an (schematisch dargestellt in Figur 2), das mit dem Lenkrad des Fahrzeugs verbunden ist. Dabei handelt es sich um eine sogenannte Mittenabnahme.

An dem bezüglich Figur 1 rechtem Ende des Gehäuses 20 ist ein Faltenbalg 24 angeordnet. Der Faltenbalg 24 ist einerseits am Gehäuse 20 und andererseits an einer Teleskophülse 26 mit einer Schelle oder einem ähnlichen Befestigungsmittel (nicht gezeigt) befestigt. Dabei umgibt der Faltenbalg 24 die Teleskophülse 26.

Die Teleskophülse 26 ist an die Zahnstange 22 gekoppelt und besteht aus Kunststoff. Die Teleskophülse 26 weist drei Schlitze 28 auf. Aufgrund der Schlitze 28 ist die Teleskophülse 26 elastischer und kann so über das Ende der Zahnstange 22 gestülpt werden. Dabei schnappt die Teleskophülse 26 hinter einer Querschnittsverbreiterung der Zahnstange 22 ein, die z.B. in Form einer Beilagscheibe 30 ausgeführt ist. Die Teleskophülse 26 weist ein Entlüftungsloch 32 auf, auf dessen Funktion im folgenden eingegangen wird.

Figur 2 zeigt die Zahnstange 22 in der rechten Stellung, d.h. beim Einschlagen in eine Linkskurve. Hierbei ist der Faltenbalg 24 zusammengefaltet. Die Zahnstange 22 befindet sich an dem rechten Ende der Teleskophülse 26. Dabei ermöglichen die Schlitze 28, daß die Beilagscheibe 30 der Zahnstange 22 an dem äußersten Ende der Teleskophülse 26 angreift und dabei den Faltenbalg 24 maximal zusammengefaltet hält.

In Figur 3 ist die Zahnstange in einer mittleren Stellung gezeigt. Die Zahnstange 22 befindet sich teilweise in der Teleskophülse 26 und zwar bis zum Ende der Schlitze 28.

Figur 4 zeigt die Zahnstange 22 in ihrer linken Stellung, d.h. beim Einschlagen in eine Rechtskurve. Die Zahnstange 22 befindet sich komplett in der Teleskophülse 26. Der Faltenbalg 24, der an dem einen Ende an der Teleskophülse 26 befestigt ist und an seinem anderen Ende an dem Gehäuse 20, ist in seiner maximal gestreckten Stellung.

Beim Einschlagen des Lenkrads in eine Rechtskurve (Figur 4) wandert die Zahnstange 22 an das Ende der Teleskophülse 26. Das Entlüftungsloch 32 ermöglicht dabei, daß die Luft, die von der Zahnstange 22 an das Ende der Teleskophülse 26 gedrückt wird, aus dieser gelangen kann.

Beim Einschlagen in eine Linkskurve (Figur 2) wird die Zahnstange 22 nach rechts verfahren und zieht dabei die Teleskophülse 26 mit dem daran befestigten Faltenbalg 24 mit Hilfe der Beilagscheibe 30 auf das Minimalste zusammen. Dabei wird erreicht, daß bei einer Linkskurve das Rad 14 vollständig eingeschlagen werden kann. Der Faltenbalg 24 wird also als variabler Teil des Gehäuses 20 angesehen.

## Patentansprüche

1. Zahnstangenlenkung, mit einem Gehäuse (20) und einer Zahnstange (22) **dadurch gekennzeichnet, daß** eine Teleskopbuchse (26) an einem Ende der Zahnstange (22) angeordnet ist, um die ein Faltenbalg (24) angeordnet ist.

2. Zahnstangenlenkung nach Anspruch 1, **dadurch gekennzeichnet, daß** der Faltenbalg (24) an einem Ende an der Teleskopbuchse (26) und an dem entgegengesetzten Ende am Gehäuse (20) befestigt ist.

3. Zahnstangenlenkung nach Anspruch 1 oder 2, **dadurch gekennzeichnet, daß** die Teleskopbuchse (26) aus Kunststoff ist.

4. Zahnstangenlenkung nach einem der vorhergehenden Ansprüche, **dadurch gekennzeichnet, daß** die Teleskopbuchse (26) mehrere Schlitze (28) aufweist.

5. Zahnstangenlenkung nach einem der vorhergehenden Ansprüche, **dadurch gekennzeichnet, daß** wenigstens ein Entlüftungsloch (32) in der Teleskopbuchse (26) vorgesehen ist.

6. Zahnstangenlenkung nach einem der vorhergehenden Ansprüche, **dadurch gekennzeichnet, daß** die Zahnstangenlenkung (18) für eine Mittenabnahmeanordnung vorgesehen ist.
